# EUROPEAN PATENT SPECIFICATION

(11) **EP 2 228 852 B1**
(45) Date of publication and mention of the grant of the patent: **23.05.2012**
(21) Application number: 10155900.3
(22) Date of filing: 09.03.2010
(51) Int. Cl.: H01M 2/26

(54) **Rechargeable battery comprising current collecting plates with improved structure**
Wiederaufladbare Batterie mit Stromsammlerplatten mit verbesserter Struktur
Batterie rechargeable comprenant des plaques collectrices de courant avec une structure améliorée

(30) Priority: 11.03.2009 US 159257 P; 27.01.2010 US 695151
(43) Date of publication of application: 15.09.2010
(73) Proprietor: SB LiMotive Co., Ltd., Suwon-si Gyeonggi-do (KR)
(72) Inventor: Byun, Sang-Won, Gyeonggi-do (KR); Kim, Yong-Sam, Gyeonggi-do (KR); Han, Dae-Won, Gyeonggi-do (KR); Kim, Sung-Bae, Gyeonggi-do (KR); Ahn, Byung-Kyu, Gyeonggi-do (KR)
(74) Representative: Gulde Hengelhaupt Ziebig & Schneider

(56) References cited:
- JP-A- 2005 267 945
- JP-A- 2006 228 551
- US-A1- 2006 222 937

## Description

### Field of the Invention

The present invention relates to a rechargeable battery, and more particularly, to a rechargeable battery having current collecting plates with improved structural characteristics.

### Description of the Related Art

A rechargeable battery differs from a primary battery in that it can be repeatedly charged and discharged, while the latter only irreversibly converts chemical energy to electrical energy. The low-capacity rechargeable battery is used as a power supply for small electronic devices, such as cellular phones, notebook computers, and camcorders, while the high-capacity rechargeable battery is used as a power supply for driving motors in hybrid vehicles and the like.

A high-power rechargeable battery using a non-aqueous electrolyte with high energy density has been recently developed. For example, the high-power rechargeable battery is constructed with a high-capacity rechargeable battery having a plurality of rechargeable cells coupled to each other in series such that it can be used as a power supply for driving motors in electric vehicles requiring high power.

Furthermore, one high-capacity rechargeable battery is commonly formed with a plurality of rechargeable cells coupled to each other in series. The rechargeable battery may have a cylindrical shape or a prismatic shape.

The prismatic rechargeable battery includes an electrode assembly with positive and negative electrodes and a separator interposed between the two electrodes, a case mounting the electrode assembly therein, a cap plate fitted to the case to seal it and having terminal holes, and terminals inserted into the terminal holes of the cap plate and protruded to the outside of the case.

With the conventional prismatic rechargeable battery, lead tabs for electrically interconnecting the electrode assembly and the terminals are fixed to the lateral sides of the uncoated regions through ultrasonic welding. However, in order to weld the lead tabs to the lateral sides of the uncoated regions, the uncoated region is required to have a certain predetermined length such that the volume of the electrode assembly is needlessly enlarged.

JP 2005 267945 A discloses the use of electrolyte inject openings formed integral with lead tabs. JP 2006 228551 A discloses lead tabs bent around the outer surface of the electrode assembly.

Furthermore, as the ultrasonic wave is applied to the uncoated regions through the lead tabs, the thickness of the lead tabs is required to be small. However, as the lead tabs are reduced in thickness, the resistance of the lead tabs is increased, and such a lot of heat is generated that the output power is decreased.

Furthermore, if an external impact is applied to the rechargeable battery, a contact failure may occur between the lead tabs and the electrode assembly such that much heat is internally generated and the output power is lowered.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having advantages of connecting the electrode assembly and the terminals to each other in a stable manner.

An exemplary embodiment of the present invention provides a rechargeable battery comprising an electrode assembly comprising a first electrode, a second electrode, and a separator interposed between the first and the second electrodes, a case for mounting the electrode assembly therein, at least one terminal electrically connected to the electrode assembly and exposed to the outside of the case, and at least one current collecting plate welded to the first and second electrodes. Each current collecting plate comprises a first protrusion arranged along a first direction of the current collecting plate, formed to have the shape of a groove, and protruding into the electrode assembly, and at least one second protrusion contacting the electrodes of the electrode assembly, formed to have the shape of a groove, and arranged along a second direction of the current collecting plate being different from the first direction.

According to the present invention, the first grooves allow to support the electrode assembly in a stable manner. Furthermore, by inserting the first grooves into the electrode assembly, possible contact failures between the electrode assembly and the current collecting plate can be prevented.

The at least one second groove is preferably welded to the ends of the electrode assembly.

Advantageously, by welding the current collecting plates to the lateral sides of the electrode assembly the volume of a coated region of the electrode assembly can be enlarged, thereby increasing the output power.

The electrode assembly is preferably formed by winding the first and second electrodes with the separator in between in said first direction. The wound electrode assembly is pressed into the form of a plate with flattened portions formed at front and back surfaces thereof and connected by bent portions disposed at the upper and lower end of the flattened portions.

The current collecting plate is preferably formed of a plate being bent or indented to form said first groove and said at least one second groove.

The first groove is preferably formed in the center of the current collecting plate along a first axis pointing in said first direction. In other words, the first grooves extend from the current collecting plate towards the electrode assembly. The first groove is preferably configured to support the electrode assembly in at least one of a width and a height direction. The first groove is arranged within the at least one current collecting plate, the bottom and the side walls of the first protrusions grooves being inserted into the electrode assembly.

Each second groove is preferably formed along the lateral axis of the respective current collecting plate perpendicular to the first groove, a plurality of second grooves preferably being arranged on the current collecting plate along its vertical axis being spaced apart from each other.

Each second groove is arranged within the at least one current collecting plate, the bottom of the second protrusion groove pressing against the first and second electrodes of the electrode assembly. Each second groove may be formed to have a trapezoid sectional shape, a triangle shape, an arc shape, or a quadrangle shape.

The first and second electrodes may comprise coated regions being coated with an active material and uncoated regions where the active material is not coated or formed, the first uncoated region of the first electrode extending to one end of the electrode assembly, the second uncoated region of the second electrode extending to the opposing end, and wherein the second grooves contact the end surfaces of the respective uncoated regions.

The current collecting plates may further comprise lateral supports formed at the lateral sides of the current collecting plates extending from the current collecting plates for contacting at least one of the first and second electrodes. In other words, if the current collecting plates extend in a plane, the lateral supports extend from opposing sides, for instance the left and right sides, of the current collecting plate in a direction not lying within said plane.

The lateral supports and the first groove extend from the same side of the current collecting plate, wherein the lateral supports contact the outermost surfaces of the respective uncoated region so as to hold the respective uncoated region between the one side of the lateral support and the first groove. Thus, in other words, wherein the first groove may contact the uncoated regions from the interior space of the winding, the lateral supports contact the uncoated regions from the outside such that the uncoated regions is press-fitted between the lateral supports and the first grooves. The distance between the first groove and the lateral support may be substantially equal to the width of the respective uncoated region. Advantageously, it becomes easy to attach the current collecting plate to the electrode assembly.

The lateral supports may be bent from the current collecting plate in an inclined manner. The angle between the lateral supports and the current collecting plate may be 90°-150° preferably 90°-120°.

The ends of the electrode assembly are provided with cut-out sections at their top end for receiving the first groove. Exhaust holes are preferably formed within the current collecting plates. An exhaust passage is formed within each current collecting plate by the backside of the first groove, such that the exhaust passage passes through the respective cut-out section and extends to the top of the electrode assembly.

Advantageously, such arrangement allows an air communication of the interior space of the electrode assembly with the outer side thereof.

### BRIEF DESCRIPTION OF THE DRAWINGS

FIG. 1 is a perspective view of a rechargeable battery according to a first exemplary embodiment of the present invention.
FIG. 2 is a cross-sectional view of the rechargeable battery taken along the II - II line of FIG. 1.
FIG. 3 is an exploded perspective view of an electrode assembly and current collecting plates according to the first exemplary embodiment of the present invention.
FIG. 4 is a perspective view of a current collecting plate according to a second exemplary embodiment of the present invention.
FIG. 5 is a perspective view of a current collecting plate and an electrode assembly according to a third exemplary embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present claims. Like reference numerals designate like elements throughout the specification.

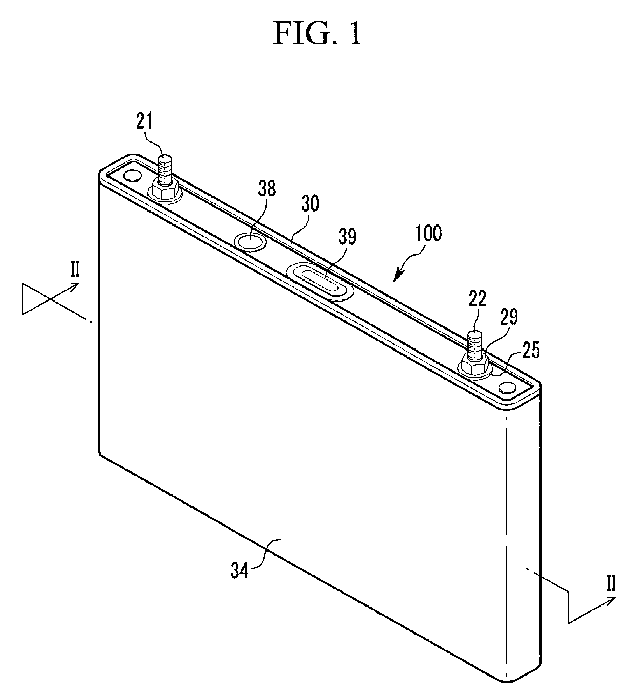

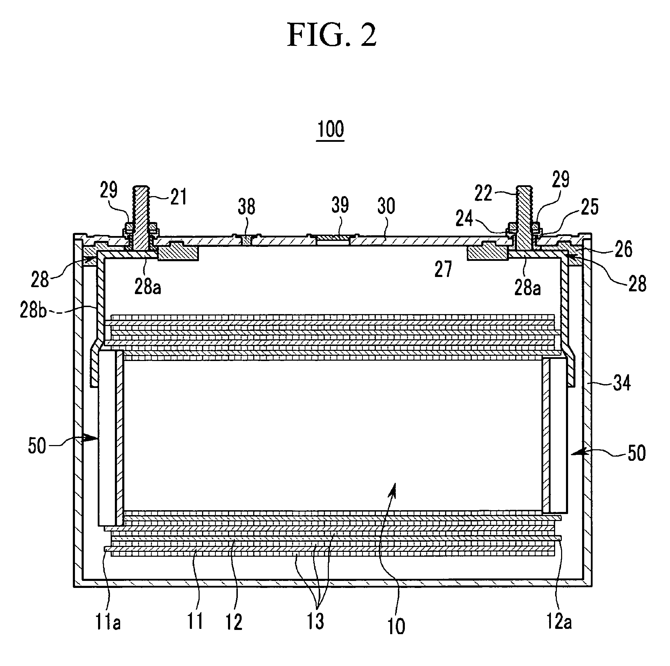

FIG. 1 is a perspective view of a rechargeable battery according to a first exemplary embodiment of the present invention, and FIG. 2 is a cross-sectional view of the rechargeable battery taken along the II - II line of FIG. 1.

Referring to FIG. 1 and FIG. 2, a rechargeable battery 100 according to the first exemplary embodiment includes an electrode assembly 10 which is formed by winding positive and negative electrodes 11 and 12 while interposing an insulating separator 13 there between, a case 34 mounting the electrode assembly 10 therein, positive and negative electrode terminals 21 and 22 electrically connected to the electrode assembly 10, and a cap plate 30 fitted to an opening of the case 34. A prismatic lithium-ion rechargeable battery will be exemplified as the rechargeable battery according to the first exemplary embodiment.

The positive and negative electrodes 11 and 12 have a coated region where a current collector based on a thin metal foil plate is coated with an active material, and uncoated regions 11 a and 12a where the active material is not coated or formed thereon.

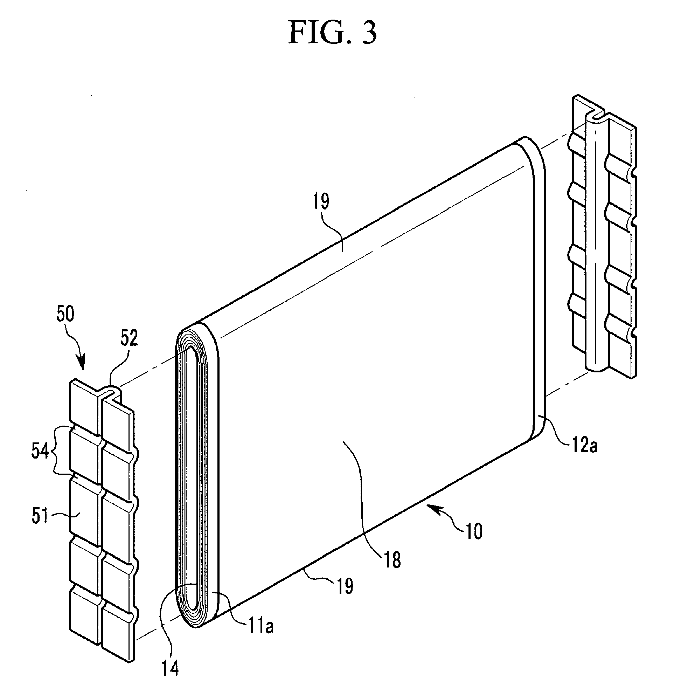

The positive electrode uncoated region 11 a is formed on one lateral end of the positive electrode 11 in the longitudinal direction thereof, and the negative electrode uncoated region 12a is formed on the other lateral end of the negative electrode 12 in the longitudinal direction thereof. After the insulating separator 13 is interposed between the positive and negative electrodes 11 and 12, the electrodes 11 and 12 and the separator 13 are wound. The electrode assembly 10 is wound and pressed flatly like a plate so that flattened portions 18 are formed at the circumferential surface thereof together with bent portions 19 disposed at both ends of the flattened portions 18, as shown in FIG. 3.

The cap plate 30 is formed with a thin plate, and an electrolyte injection opening is formed at the cap plate 30. A sealing valve 38 is provided at the opening. A vent member 39 with a groove is installed at the cap plate 30 such that it may be broken at a predetermined internal pressure.

An upper gasket 25 and a lower gasket 27 are provided between the cap plate 30 and the terminals 21 and 22 so as to insulate the cap plate 30 and the terminals 21 and 22 from each other. In this description, the term "terminal" refers to both the positive and negative electrode terminals.

The lower gasket 27 is fitted to the terminal hole, and the upper gasket 25 is installed on the cap plate 30. A washer 24 is provided on the upper gasket 25 in order to improve the coupling thereof. Nuts 29 are respectively coupled to the positive and negative electrode terminals 21 and 22 to support them from the top side.

A current collecting plate 50 is welded to the positive electrode uncoated region 11 a of the electrode assembly 10, and is electrically connected to the positive electrode terminal 21 via a lead member 28. Furthermore, another current collecting plate 50 is welded to the negative uncoated region 12a, and is electrically connected to the negative electrode terminal 22 via a corresponding lead member 28. Insulating members 26 are disposed between the lead members 28 and the cap plate 30 to insulate them from each other. The lead members 28 include current collecting lead portions 28b attached to the current collecting plates 50, and terminal lead portions 28a attached to the terminals 21 and 22, respectively.

FIG. 3 is an exploded perspective view of the electrode assembly and the current collecting plates according to the first exemplary embodiment of the present invention.

Referring to FIG. 3, the electrode assembly 10 according to the first exemplary embodiment is wound and flatly pressed in the shape of a plate. An interior space 14 is formed at the center of the electrode assembly 10 with a predetermined size or volume.

The current collecting plates 50 have first support grooves 52 inserted into the interior space of the electrode assembly 10, and second or welding grooves 54 tightly attached to the lateral ends of the electrode assembly 10 to press against the uncoated regions 11 a, 12a of the electrode assembly 10. The lateral ends of the electrode assembly 10 are the ends where the uncoated regions 11 a, 12a are formed. In Fig. 3, it is the left and right side of the electrode assembly 10.

The support groove 52 is preferably formed at the width-directed center of the current collecting plate 50 in the longitudinal direction thereof. The support groove 52 preferably extends along the length of current collecting plate 50, in Fig. 3 the vertical direction. The current collecting plate 50 is bent or indented to form the support protrusion 52, and accordingly, a concave groove is formed at the backside of the protruded portion. The support groove 52 extends from the current collecting plate 50 towards the electrode assembly 10. The height or length of the support groove 52 corresponds to the height or length of the opening of the interior space 14 of the electrode assembly 10.

The support protrusion 52 is inserted into the interior space 14 of the electrode assembly 10 to support the electrode assembly 10 so that possible contact failures between the electrode assembly 10 and the current collecting plate 50 due to external impacts can be prevented. The support groove 52 supports the electrode assembly 10 in the width direction of the interior space 14 (in Fig. 3, the left and right inner sides of the interior space 14) as well as in the longitudinal direction thereof (in Fig. 3, the top and bottom inner sides of the interior space 14), thereby stabilizing the electrode assembly 10.

Attachment plates 51 are connected to both lateral ends of the support groove 52, and welding grooves 54 are connected to the attachment plates 51 in the width direction thereof, in Fig. 3 the horizontal direction. The welding grooves 54 are disposed in the direction of the uncoated regions 11a and 12a such that they preferably entirely contact the uncoated regions 11 a and 12a. The attachment plates 51 are bent or intended in the shape of an arc so as to form the welding grooves 54, and hence, concave grooves are formed at the backside of the convexly protruded portions. The welding protrusion 54 extends from the current collecting plate 50 in direction of the electrode assembly 10. Yet, they are formed in a perpendicular direction in comparison to the support grooves 52. While a support groove 52 in Fig. 3 extends vertically along the length of the current collecting plate 50, a welding groove 54 extends horizontally along the current collecting plate 50. The plurality of welding protrusions 54 is formed spaced apart from each other along the vertical direction in Fig. 3. The second or welding grooves 54 preferably contact a plurality of electrode layers of the electrode assembly 10 formed by winding said layers, i.e. they contact the electrode layers from a side. However, the present invention is not limited thereto, and the cross-section of the welding groove 54 may be formed in the shape of any one of a triangle, a quadrangle, and an arc.

The attachment plates 51 are tightly adhered or pressed to the lateral sides of the electrode assembly 10, and the welding grooves 54 press against the uncoated regions 11 a and 12a disposed at the lateral ends of the electrode assembly 10 such that an electrical contact resistance can be reduced. A current collecting plate 50 covers a side face of electrode assembly 10. Preferably, the current collecting plate 50 is pressed into the electrode assembly 10 such that the attachment plates 51 contact the uncoated regions 11 a, 12a. In this description, the term "lateral side" refers to the side of the target proceeding vertical to the central axis of the winding.

Accordingly, the contact area between the current collector plate 50 and the uncoated regions 11 a and 12a can be enlarged. A plurality of the welding grooves 54 are arranged in the longitudinal direction of the current collecting plate 50 such that they are spaced apart from each other by a distance, and are preferably attached to the lateral side of the electrode assembly 10 through laser welding. When the attachment of the welding grooves is made through laser welding, the current collecting plate is enlarged in thickness compared to the case of ultrasonic welding so that the resistance of the current collecting plate can be reduced.

As the current collecting plate 50 is fixed to the lateral ends of the uncoated regions 11 a and 12a, the uncoated regions 11 a and 12a are relatively reduced in area, and the coated region with the active material is relatively enlarged in area so that the whole output power of the electrode assembly 10 can be increased.

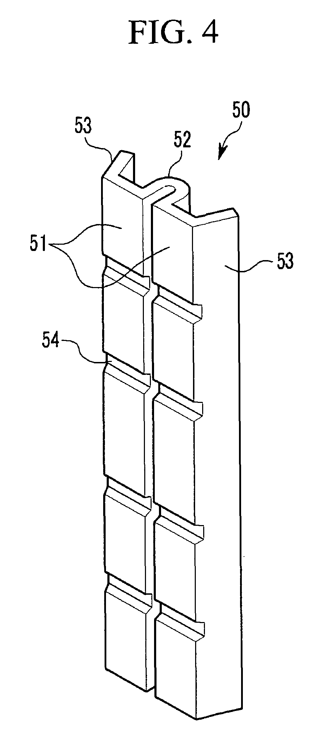

FIG. 4 is a perspective view of a current collecting plate according to a second exemplary embodiment of the present invention. Referring to FIG. 4, a current collecting plate 50 according to the second exemplary embodiment has a support groove 52 which is centrally protruded in a convex manner, attachment plates 51 extended from both sides of the support groove 52, and lateral supports 53 extended from the lateral ends of the attachment plates 51 and contacting the uncoated region 11 a or 12a of the electrode assembly 10. The support grooves 52 extend from the attachment plates 51 towards the electrode assembly 10. The arrangement of the support grooves 52 and the welding grooves 54 with respect to each other and with respect to a main face of the current collecting plate 50 is similar to that of the first embodiment and is not repeated here.

The support protrusion 52 is formed at the width-directed center of the current collecting plate 50 in the longitudinal direction thereof. The support protrusion 52 is inserted into the interior space of the electrode assembly 10 so as to support the electrode assembly 10.

Welding grooves 54 extend from the attachment plates 51 connected to both lateral ends of the support protrusion 52 in the width direction to curvedly press against the uncoated region 11a or 12a. The welding grooves 54 are disposed in the direction of the uncoated region 11a or 12a so that they entirely contact the uncoated region 11a or 12a. The attachment plates 51 are bent in the shape of a quadrangle so as to form the welding grooves 54, and accordingly, concave grooves are formed at the backside of the convexly protruded portions.

The welding grooves 54 according to the present exemplary embodiment have a trapezoid sectional shape, but the present invention is not limited thereto. The cross-section of the welding groove 54 may be formed with various shapes such as a triangle, an arc, and a quadrangle.

Lateral supports 53 are formed at the lateral ends of the attachment plates 51 such that they are bent from the attachment plates 51 in an inclined manner. The lateral supports 53 contact the outermost surface of the uncoated region 11 a or 12a so as to tightly hold the uncoated region 11 a or 12a. That is, the one side uncoated region portion is tightly held between the one side lateral support 53 and the support groove 52, and the other side uncoated region portion is tightly held between the other side lateral support 53 and the support groove 52.

As the rechargeable battery according to the present exemplary embodiment is based on a lithium-ion battery, the uncoated regions 11 a and 12a of the lithium-ion battery are formed with a thin film, which is smaller in thickness than those of other kinds of batteries such as a lithium-polymer battery. Furthermore, as the uncoated regions 11 a and 12a are smaller in thickness than the coated region with the active material, the structural components thereof may be distanced from each other due to the coated region. Accordingly, it is not easy to attach the current collecting plates 50 to the ends of the uncoated regions 11 a and 12a with an extremely thin thickness. However, with the present exemplary embodiment, when the structural components of the uncoated region 11 a or 12a are collectively and tightly held and pressed together between the lateral supports 53 and the support groove 52, it becomes easy to attach the current collecting plate 50 to the end of the tightly held uncoated region 11 a or 12a through welding.

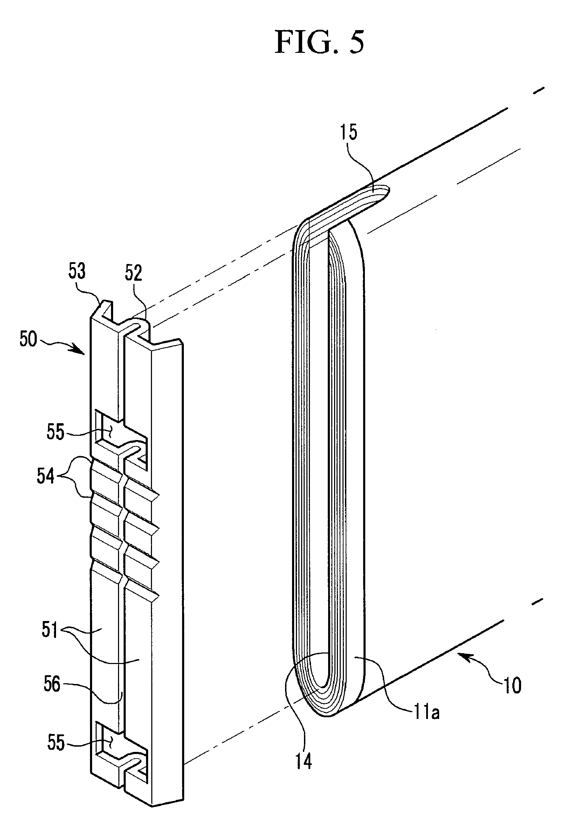

FIG. 5 is a perspective view of a current collecting plate and an electrode assembly according to a third exemplary embodiment of the present invention. Referring to FIG. 5, a current collecting plate 50 according to the third exemplary embodiment includes a support groove 52 centrally protruded in a convex manner, attachment plates 51 extended from both sides of the support groove 52, and lateral supports 53 extended from the lateral ends of the attachment plates 51 and contacting the uncoated region 11 a or 12a of the electrode assembly 10. The arrangement of the support grooves 52 and the welding grooves 54 with respect to each other and with respect to a main face of the current collecting plate 50 is similar to that of the first embodiment and is not repeated here.

The support groove 52 is formed at the width-directed center of the current collecting plate 50 in the longitudinal direction thereof, and is inserted into the interior space of the electrode assembly 10 so as to support the electrode assembly 10.

The attachment plates 51 are connected to both lateral ends of the support groove 52, and welding grooves 54 are connected to the attachment plates 51 in the width direction so as to curvedly put pressure on the uncoated region 11 a or 12a. The attachment plates 51 are bent in the shape of a triangle to form the welding grooves 54, and accordingly, the welding grooves 54 curvedly put pressure on the uncoated regions 11a or 12a at the triangular corners thereof.

In this way, as the welding grooves 54 are formed in the shape of a triangle, the welding heat is concentrated on the triangular corners thereof so that the current collecting plate and the uncoated region can be easily welded to each other. Furthermore, as the stress is focused on the tapered portions, the uncoated region can be easily curved in a direction.

The lateral supports 53 are formed at the lateral ends of the attachment plates 51 such that they are bent from the attachment plates 51 in an inclined manner. The lateral supports 53 contact the outermost surface of the uncoated region 11 a or 12a so as to tightly contact the uncoated region 11 a or 12a.

The top end of the electrode assembly 10 is cut to form a groove 15 for receiving the support groove 52. The grooves 15 are disposed at both lateral ends of the electrode assembly 10 such that they air-communicate the interior space of the electrode assembly 10 with the outer side thereof. Furthermore, the support groove 52 contacts the bottom end of the interior space while being inserted into the groove 15 at the top end thereof.

Meanwhile, exhaust holes 55 are formed at the top and the bottom ends of the current collecting plate 50, respectively, such that they each penetrate through the attachment plate 51 and the support protrusion 52. Furthermore, a concave exhaust passage 56 is formed at the backside of the support groove 52 such that it passes through the groove 15 and extends to the top end of the electrode assembly 10. Accordingly, gas generated from the interior of the electrode assembly 10 flows to the top of the case 34 through the exhaust hole 55 and the exhaust passage 56.

When gas is generated within the electrode assembly 10, the electrode assembly 10 swells so that the charge and discharge efficiency may be deteriorated. However, when the exhaust holes 55 are formed as in the present exemplary embodiment, the gas can be easily exhausted.

Furthermore, it is required that the gas exhausted from the electrode assembly 10 flows to the top so as to apply pressure thereto and operate the vent member 39 at a predetermined pressure. In the present exemplary embodiment, when the exhaust passage 56 extends to the top end of the electrode assembly 10, the generated gas can easily flow to the top of the case 34.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (100) comprising:
an electrode assembly (10) comprising a first electrode (11), a second electrode (12), and a separator (13) interposed between the first and the second electrodes (11, 12),
a case (34) for mounting the electrode assembly (10) therein,
at least one terminal (21, 22) electrically connected to the electrode assembly (10) and exposed to the outside of the case (34),
at least one current collecting plate (50) welded to one of the first and second electrodes (11, 12),
**characterized in that**
each current collecting plate (50) comprises:
a first groove (52) arranged along a first direction of the current collecting plate (50) and protruding into the electrode assembly (10), and
at least one second groove (54) contacting the electrodes (11, 12) of the electrode assembly (10) and arranged along a second direction of the current collecting plate (50) being different from the first direction.

2. Rechargeable battery (100) of claim 1, wherein the at least one second groove (54) is welded to the ends of the electrode assembly (10).

3. Rechargeable battery (100) of claim 1 or 2, wherein the electrode assembly (10) is formed by winding the first and second electrodes (11, 12) with the separator (13) in between in said first direction.

4. Rechargeable battery (100) according to claim 3, wherein the wound electrode assembly (10) is pressed in form of a plate with flattened portions (18) formed front and back surface thereof connected by bent portions (19) disposed at the upper and lower end of the flattened portions (18).

5. Rechargeable battery (100) of any of the previous claims, wherein the current collecting plate (50) is formed of a plate being bent or indented to form said first groove (52) and said at least one second groove (54).

6. Rechargeable battery (100) of any of the previous claims, wherein the first groove (52):
is formed in the center of the current collecting plate (50) along a first axis pointing in said first direction; and/or
is configured to support the electrode assembly (10) in at least one of a width and a height direction; and/or
the bottom and the side walls of the first grooves being inserted into the electrode assembly (10).

7. Rechargeable battery (100) of any of the previous claims, wherein each second groove (54) is formed along the lateral axis of the respective current collecting plate (50) perpendicular to the first groove (52), a plurality of second grooves (54) being arranged on the current collecting plate (50) along its vertical axis being spaced apart from each other.

8. Rechargeable battery (100) of any of the previous claims, wherein the bottom of the second groove is pressing against the first and second electrodes (11, 12) of the electrode assembly (10).

9. Rechargeable battery (100) of any of the previous claims, wherein the first and second electrodes (11, 12) comprise coated regions (11, 12) being coated with an active material and uncoated regions where the active material is not coated, the first uncoated region (11 a) of the first electrode (11) extending to one end of the electrode assembly (10), the second uncoated region (12a) of the second electrode extending to the opposing end, and wherein the second grooves (54) contact the end surfaces of the respective uncoated regions (11 a, 12a).

10. Rechargeable battery (100) of any of the previous claims, wherein the current collecting plates (50) further comprise lateral supports (53) formed at the lateral sides of the current collecting plates (50) extending from the current collecting plates (50) for contacting at least one of the first and second electrodes (11, 12).

11. Rechargeable battery (100) of claim 10, wherein the lateral supports (53) and the first groove (52) extend from the same side of the current collecting plate (50), wherein the lateral supports (53) contact the outermost surfaces of the respective uncoated region (11 a, 12a) so as to hold the respective uncoated region (11 a, 12a) between the one side of the lateral support (53) and the first groove (52).

12. Rechargeable battery (100) of claim 10 or 11, wherein lateral supports (53) are bent from the current collecting plate (50) in an inclined manner.

13. Rechargeable battery (100) of any of the previous claims, wherein the ends of the electrode assembly (10) are provided with cut-out sections (15) at their top end for receiving the first groove (52).

14. Rechargeable battery (100) of claim 13, wherein exhaust holes (55) are formed within the current collecting plates (50).

15. Rechargeable battery (100) of claim 13 or 14, wherein an exhaust passage is formed within each current collecting plate (50) by the backside of the first groove (52), such that the exhaust passage (56) passes through the respective cut-out section (15) and extends to the top of the electrode assembly (10).

## Patentansprüche

1. Wiederaufladbare Batterie (100), umfassend:
eine Elektrodenanordnung (10) umfassend eine erste Elektrode (11), eine zweite Elektrode (12) sowie einen zwischen die erste und die zweite Elektrode (11, 12) geschalteten Separator (13),
ein Gehäuse (34) zum Anbringen der Elektrodenanordnung (10) darin, mindestens eine Klemme (21, 22), die elektrisch mit der Elektrodenanordnung (10) verbunden ist und außerhalb des Gehäuses (34) freiliegt,
mindestens eine Stromsammlerplatte (50), die mit einer der ersten und zweiten Elektroden (11, 12) verschweißt ist,
**dadurch gekennzeichnet, dass**
jede Stromsammlerplatte (50) umfasst:
eine erste Auskehlung (52), die entlang einer ersten Richtung der Stromsammlerplatte (50) angeordnet ist und in die Elektrodenanordnung hineinragt (10), und
mindestens eine zweite Auskehlung (54), welche die Elektroden (11, 12) der Elektrodenanordnung (10) kontaktiert und entlang einer sich von der ersten Richtung unterscheidenden zweiten Richtung der Stromsammlerplatte (50) angeordnet ist.

2. Wiederaufladbare Batterie (100) nach Anspruch 1, wobei die mindestens eine zweite Auskehlung (54) mit den Enden der Elektrodenanordnung (10) verschweißt ist.

3. Wiederaufladbare Batterie (100) nach Anspruch 1 oder 2, wobei die Elektrodenanordnung (10) durch Wickeln der ersten und zweiten Elektrode (11, 12) mit dem dazwischenliegenden Separator (13) in die erste Richtung gebildet wird.

4. Wiederaufladbare Batterie (100) nach Anspruch 3, wobei die gewickelte Elektrodenanordnung (10) in die Form einer Platte gepresst wird, mit abgeflachten Abschnitten (18), die an der Vorder- und Rückfläche derselben ausgebildet sind und durch gebogene Abschnitte (19) verbunden sind, welche am oberen und unteren Ende der abgeflachten Abschnitte (18) angeordnet sind.

5. Wiederaufladbare Batterie (100) nach einem der vorstehenden Ansprüche, wobei die Stromsammlerplatte (50) aus einer Platte besteht, die zur Ausbildung der ersten Auskehlung (52) und der mindestens einen zweiten Auskehlung (54) gebogen oder eingedrückt ist.

6. Wiederaufladbare Batterie (100) nach einem der vorstehenden Ansprüche, wobei die erste Auskehlung (52):
in der Mitte der Stromsammlerplatte (50) entlang einer ersten in die erste Richtung weisenden Achse gebildet ist; und/oder
ausgebildet ist, die Elektrodenanordnung (10) in mindestens einer einer Breiten- und einer Höhenrichtung zu halten; und/oder
der Grund und die Seitenwände der ersten Auskehlungen in die Elektrodenanordnung (10) eingeschoben werden.

7. Wiederaufladbare Batterie (100) nach einem der vorstehenden Ansprüche, wobei jede zweite Auskehlung (54) entlang der Querachse der jeweiligen Stromsammlerplatte (50) senkrecht zur ersten Auskehlung (52) ausgebildet ist, wobei eine Vielzahl zweiter Auskehlungen (54) auf der Stromsammlerplatte (50) entlang ihrer vertikalen Achse beabstandet voneinander angeordnet sind.

8. Wiederaufladbare Batterie (100) nach einem der vorstehenden Ansprüche, wobei der Grund der zweiten Auskehlung gegen die erste und zweite Elektrode (11, 12) der Elektrodenanordnung (10) drückt.

9. Wiederaufladbare Batterie (100) nach einem der vorstehenden Ansprüche, wobei die erste und zweite Elektrode (11, 12) beschichtete Bereiche (11, 12) aufweisen, die mit einem Aktivmaterial beschichtet sind, sowie unbeschichtete Bereiche, bei denen das Aktivmaterial nicht beschichtet ist, wobei sich der erste unbeschichtete Bereich (11a) der ersten Elektrode (11) zu einem Ende der Elektrodenanordnung (10) erstreckt, sich der zweite unbeschichtete Bereich (12a) der zweiten Elektrode zum gegenüberliegenden Ende hin erstreckt, und wobei die zweiten Auskehlungen (54) die Stirnflächen der jeweiligen unbeschichteten Bereiche (11a, 12a) kontaktieren.

10. Wiederaufladbare Batterie (100) nach einem der vorstehenden Ansprüche, wobei die Stromsammlerplatten (50) ferner seitliche Halter (53) umfassen, die an den lateralen Seiten der Stromsammlerplatten (50) ausgebildet sind und sich von den Stromsammlerplatten (50) zum Kontaktieren mindestens einer der ersten und zweiten Elektroden (11, 12) erstrecken.

11. Wiederaufladbare Batterie (100) nach Anspruch 10, wobei die seitlichen Halter (53) sowie die erste Auskehlung (52) sich von derselben Seite der Stromsammlerplatte (50) aus erstrecken, wobei die seitlichen Halter (53) die äußersten Flächen des jeweiligen unbeschichteten Bereichs (11a, 12a) kontaktieren, um den jeweiligen unbeschichteten Bereich (11a, 12a) zwischen der einen Seite des seitlichen Halters (53) und der ersten Auskehlung (52) festzuhalten.

12. Wiederaufladbare Batterie (100) nach Anspruch 10 oder 11, wobei seitliche Halter (53) von der Stromsammlerplatte (50) aus mit einer Neigung gebogen sind.

13. Wiederaufladbare Batterie (100) nach einem der vorstehenden Ansprüche, wobei die Enden der Elektrodenanordnung (10) an ihrem oberen Ende mit ausgeschnittenen Abschnitten (15) zur Aufnahme der ersten Auskehlung (52) versehen sind.

14. Wiederaufladbare Batterie (100) nach Anspruch 13, wobei Auslassöffnungen (55) in den Stromsammlerplatten (50) ausgebildet sind.

15. Wiederaufladbare Batterie (100) nach Anspruch 13 oder 14, wobei in jeder Stromsammlerplatte (50) durch die Rückseite der ersten Auskehlung (52) ein Auslasskanal derart ausgebildet ist, dass der Auslasskanal (56) durch den jeweiligen ausgeschnittene Abschnitt (15) verläuft und sich bis zum oberen Ende der Elektrodenanordnung (10) erstreckt.

## Revendications

1. Batterie rechargeable (100), comprenant :
un ensemble d'électrodes (10) comprenant une première électrode (11), une deuxième électrode (12) et un séparateur (13) interposé entre la première et la deuxième électrode (11, 12),
un boîtier (34) pour monter l'ensemble d'électrodes (10) à l'intérieur de celui-ci,
au moins une borne (21, 22) électriquement connectée à l'ensemble d'électrodes (10) et exposée à l'extérieur du boîtier (34),
au moins une plaque de collecte de courant (50) soudée à l'une des première et deuxième électrodes (11, 12),
**caractérisée en ce que** :
chaque plaque de collecte de courant (50) comprend :
une première rainure (52) située le long d'une première direction de la plaque de collecte de courant (50) et faisant saillie à l'intérieur de l'ensemble d'électrodes (10), et
au moins une deuxième rainure (54) venant en contact avec les électrodes (11, 12) de l'ensemble d'électrodes (10) et disposée le long d'une deuxième direction de la plaque de collecte de courant (50), celle-ci étant différente de la première direction.

2. Batterie rechargeable (100) selon la revendication 1, dans laquelle la au moins une deuxième rainure (54) est soudée aux extrémités de l'ensemble d'électrodes (10).

3. Batterie rechargeable (100) selon la revendication 1 ou 2, dans laquelle l'ensemble d'électrodes (10) est formée par enroulement des première et deuxième électrodes (11, 12) avec le séparateur (13) entre celles-ci dans ladite première direction.

4. Batterie rechargeable (100) selon la revendication 3, dans laquelle l'ensemble d'électrodes enroulé (10) est pressé sous la forme d'une plaque avec des parties aplaties (18) formées aux surfaces avant et arrière de celle-ci, reliées par des parties incurvées (19) disposées aux extrémités supérieure et inférieure des parties aplaties (18).

5. Batterie rechargeable (100) selon l'une quelconque des revendications précédentes, dans laquelle la plaque de collecte de courant (50) est constituée par une plaque qui est incurvée ou qui comporte des indentations de façon à former ladite première rainure (52) et ladite au moins une deuxième rainure (54).

6. Batterie rechargeable (100) selon l'une quelconque des revendications précédentes, dans laquelle la première rainure (52) :
est formée dans le centre de la plaque de collecte de courant (50) le long d'un premier axe pointant dans ladite première direction ; et/ou
est configurée de façon à supporter l'ensemble d'électrodes (10) dans au moins l'une d'une direction de la largeur et d'une direction de la hauteur ; et/ou es parois inférieures et latérales des premières rainures étant insérées dans l'ensemble d'électrodes (10).

7. Batterie rechargeable (100) selon l'une quelconque des revendications précédentes, dans laquelle chaque deuxième rainure (54) est formée le long de l'axe latéral de la plaque de collecte de courant respective (50) perpendiculairement à la première rainure (52), une pluralité de deuxièmes rainures (54) étant situées sur la plaque de collecte de courant (50) le long de son axe vertical, mutuellement espacées les unes des autres.

8. Batterie rechargeable (100) selon l'une quelconque des revendications précédentes, dans laquelle le fond de la deuxième rainure appuie contre les première et deuxième électrodes (11, 12) de l'ensemble d'électrodes (10).

9. Batterie rechargeable (100) selon l'une quelconque des revendications précédentes, dans laquelle les première et deuxième électrodes (11, 12) comprennent des régions revêtues (11, 12) qui sont revêtues par un matériau actif et des régions non revêtues qui ne sont pas revêtues par le matériau actif, la première région non revêtue (11a) de la première électrode (11) s'étendant vers une extrémité de l'ensemble d'électrodes (10), la deuxième région non revêtue (12a) de la deuxième électrode s'étendant vers l'extrémité opposée, et dans laquelle les deuxièmes rainures (54) viennent en contact avec les surfaces d'extrémité des régions non revêtues respectives (11a, 12a).

10. Batterie rechargeable (100) selon l'une quelconque des revendications précédentes, dans laquelle les plaques de collecte de courant (50) comprennent de plus des supports latéraux (53) formés sur les côtés latéraux des plaques de collecte de courant (50), s'étendant à partir des plaques de collecte de courant (50) de façon à venir en contact avec au moins l'une des première et deuxième électrodes (11, 12).

11. Batterie rechargeable (100) selon la revendication 10, dans laquelle les supports latéraux (53) et la première rainure (52) s'étendent à partir du même côté de la plaque de collecte de courant (50), les supports latéraux (53) venant en contact avec les surfaces situées le plus à l'extérieur de la région respective non revêtue (11 a, 12a) de façon à maintenir la région non revêtue respective (11a, 12a) entre le premier côté du support latéral (53) et la première rainure (52).

12. Batterie rechargeable (100) selon la revendication 10 ou 11, dans laquelle les supports latéraux (53) sont incurvés à partir de la plaque de collecte de courant (50) d'une façon inclinée.

13. Batterie rechargeable (100) selon l'une quelconque des revendications précédentes, dans laquelle les extrémités de l'ensemble d'électrodes (10) comportent des sections d'entaille (15) à leur extrémité supérieure afin de recevoir la première rainure (52).

14. Batterie rechargeable (100) selon la revendication 13, dans laquelle des trous d'évacuation (55) sont formés à l'intérieur des plaques de collecte de courant (50).

15. Batterie rechargeable (100) selon la revendication 13 ou 14, dans laquelle un passage d'évacuation est formé à l'intérieur de chaque plaque de collecte de courant (50) par le côté arrière de la première rainure (52), de telle sorte que le passage d'évacuation (56) traverse la section d'entaille respective (15) et s'étende vers le sommet de l'ensemble d'électrodes (10).
